# EUROPÄISCHE PATENTSCHRIFT

(11) **EP 1 030 969 B1**
(45) Veröffentlichungstag und Bekanntmachung des Hinweises auf die Patenterteilung: **05.03.2008**
(21) Anmeldenummer: 99923378.6
(22) Anmeldetag: 23.03.1999
(51) Int. Cl.: F02M 57/00, F02M 51/06, G01L 23/22

(54) **BRENNSTOFFEINSPRITZVENTIL-DRUCKSENSOR-KOMBINATION**
FUEL INJECTION VALVE AND PRESSURE SENSOR COMBINATION
COMBINAISON INJECTEUR DE CARBURANT-CAPTEUR DE PRESSION

(30) Priorität: 19.06.1998 DE 19827287
(43) Veröffentlichungstag der Anmeldung: 30.08.2000
(73) Patentinhaber: ROBERT BOSCH GMBH, 70442 Stuttgart (DE)
(72) Erfinder: SIMON, Stefan, D-74374 Zaberfeld (DE); KREBS, Holger, D-71729 Erdmannhausen (DE)
(86) Internationale Anmeldenummer: PCT/DE1999/000837
(87) Internationale Veröffentlichungsnummer: WO 1999/067528

(56) Entgegenhaltungen:
- DE-A- 3 130 238
- DE-A- 19 622 651
- GB-A- 2 145 153
- US-A- 5 479 902

## Beschreibung

### Stand der Technik

Die Erfindung betrifft eine Brennstoffeinspritzventil-Drucksensor-Kombination für Brennstoffeinspritzanlagen zum direkten Einspritzen von Brennstoff in den Brennraum einer Brennkraftmaschine und zum Messen des Drucks in dem Brennraum.

Z. B. aus der DE 195 00 706 A1 ist ein Brennstoffeinspritzventil mit einem piezoelektrischen Aktor bekannt. Bei diesem bekannten Hrennstoffeinspritzuentil betätigt der piezoelektrische oder magnetostriktive Aktor einen Arbeitskolben, der über einen hydraulischen Wegtransformator einen Hubkolben beaufschlagt. Der Hubkolben steht formschlüssig über eine Ventilnadel mit einem an der Abspritzöffnung vorgesehenen Ventilschließkörper in Verbindung. Der piezoelektrische oder magnetostriktive Aktor ist daher über den hydraulischen Wegtransformator kraftschlüssig mit dem Ventilschließkörper verbunden. Wenn der Aktor mit einer entsprechenden elektrischen Spannung beaufschlagt wird, dehnt sich dieser aus und verschiebt den Arbeitskolben entsprechend. Bereits eine relativ geringe Verschiebung des Arbeitskolbens wird durch den hydraulischen Wegtransformator in eine erheblich größere Verschiebung des Hubkolbens transformiert, so daß der Ventilschließkörper die Abspritzöffnung mit ausreichendem Querschnitt freigibt.

Ein Brennstoffeinspritzventil ähnlicher Bauart geht auch aus der DE 43 06 073 C1 hervor. Aus dieser Druckschrift ist insbesondere auch eine gehäuseseitige Lagerung des Aktors in einem speziellen Kugelscheibenlager bekannt, um bei einer geringfügigen Nicht-Parallelität der Aktorendflächen eine ganzflächige Anlage des piezoelektrischen Aktors an dem von diesem beaufschlagten Druckkolben zu erreichen.

Für verschiedene Anwendungen ist es wünschenswert, den in dem Brennraum herrschenden Druck durch einen geeigneten Sensor zu erfassen. Dazu ist es bisher üblich, Drucksensoren als Einzelbauteile an dem Zylinderkopf der Brennkraftmaschine vorzusehen und auf diese Weise den Verbrennungsdruck in den Brennräumen der Brennkraftmaschine zu messen. Da heutige Brennkraftmaschinen mehrere Einlaß- und Auslaßventile pro Brennraum aufweisen und ferner bei der Direkteinspritztechnik neben einem Brennstoffeinspritzventil zum direkten Einspritzen des Brennstoffes in den Brennraum der Brennkraftmaschine bei fremdgezündeten Brennkraftmaschinen auch noch eine Zündkerze zum Zünden des Brennstoffs erforderlich ist, ist der an dem Zylinderkopf vorhandene Einbauplatz sehr begrenzt. Da für die als Einzelbauteile ausgebildeten Drucksensoren eine separate Bohrung an dem Zylinderkopf erforderlich ist, stößt die praktische Realisierung einer Druckmessung an direkt in den Brennraum einspritzenden Einspritzanlagen auf Schwierigkeiten.

Aus der DE 196 22 651 A1 ist jedoch bereits eine Zylinderdruck-Erfassungsvorrichtung, die als Brennstoffeinspritzventil-Drucksensor-Kombination angesehen werden kann, bekannt. Diese Brennstoffeinspritzventil-Drucksensor-Kombination ist in Brennstoffeinspritzanlagen zum direkten Einspritzen von Brennstoff in den Brennraum einer Brennkraftmaschine einsetzbar und dient zudem zum Messen des Drucks in dem Brennraum. Das Brennstoffeinspritzventil ist in einer Aufnahmebohrung des Zylinderkopfes eingebracht. Zwischen dem Brennstoffeinspritzventil und einer Schulter der Aufnahmebohrung ist ein Zylinderdrucksensor in Form einer Befestigungsscheibe angeordnet. Auf den Zylinderdrucksensor wird ein vorgegebener Druck ausgeübt, wenn das Brennstoffeinspritzventil in der Aufnahmebohrung des Zylinderkopfes mittels eines Schraubgewindes mit einem vorgegebenen Drehmoment festgeschraubt wird. Der Zylinderdrucksensor selbst weist ein Paar von ringförmigen piezoelektrischen Elementen zwischen äußeren Anschlussplatten auf. Der Zylinderdrucksensor erfasst die Druckschwankungen im Brennraum, die durch die Verbrennung des Gemisches hervorgerufen werden, als leichte Verschiebungen des Brennstoffeinspritzventils in der Aufnahmebohrung.

### Vorteile der Erfindung

Die erfindungsgemäße Brennstoffeinspritzventil-Drucksensor-Kombination mit den Merkmalen des Anspruchs 1 hat demgegenüber den Vorteil, daß die Brennstoffeinspritzung und die Druckmessung mittels eines Bauteils erfolgt, das diese Funktionen gemeinsam realisiert. Dabei ist lediglich eine einzige Zylinderkopfbohrung zur Montage der Brennstoffeinspritzventil-Drucksensor-Kombination erforderlich. Durch die

Einsparung der Drucksensoren als zusätzliches Bauteil lassen sich ferner die Fertigungskosten deutlich reduzieren.

Das Verfahren zum Betreiben einer Brennstoffeinspritzventil-Drucksensor-Kombination mit den Merkmalen des Anspruchs 5 hat den Vorteil, daß die Betätigung des Brennstoffeinspritzventils und die Druckerfassung durch ein einziges piezoelektrisches oder magnetostriktives Element vorgenommen wird, das diese beide Funktionen erfüllt. Da die Zumessung des Brennstoffes und die Erfassung des Verbrennungsdrucks nicht gleichzeitig sondern in zueinander versetzten Betriebsphasen erfolgt, kann die Zumessung des Brennstoffs und die Erfassung des Verbrennungsdrucks mit den gleichen Bauteilen zeitlich hintereinander erfolgen.

Durch die in den Unteransprüchen aufgeführten Maßnahmen sind vorteilhafte Weiterbildungen und Verbesserungen der in dem Anspruch 1 angegebenen Brennstoffeinspritzventil-Drucksensor - Kombination bzw. des in dem Anspruch 5 angegebenen Verfahrens möglich.

In vorteilhafter Weise kann mit dem erfindungsgemäßen Verfahren jeder Zylinder der Brennkraftmaschine unabhängig daraufhin überprüft werden, ob ein Klopfen z.B. aufgrund undichter Ventile oder eine Zündaussetzung z.B. aufgrund einer nicht funktionstüchtigen Zündkerze auftritt. Dies kann in ein Warnsignal für den Fahrer eines Kraftfahrzeugs umgesetzt werden, in welchem die mit der erfindungsgemäßen Brennstoffeinspritzventil-Drucksensor-Kombination ausgestattete Brennkraftmaschine eingebaut ist.

### Zeichnung

Ein Ausführungsbeispiel der Erfindung ist in der Zeichnung vereinfacht dargestellt und in der nachfolgenden Beschreibung näher erläutert. Es zeigen:
- Fig. 1: einen Schnitt durch ein Ausführungsbeispiel der erfindungsgemäßen Brennstoffeinspritzventil-Drucksensor-Kombination und
- Fig. 2: den Ausschnitt II in Fig. 1 in einer perspektivischen Darstellungen mit verschiedenen Einzelheiten.

### Beschreibung des Ausführungsbeispiels

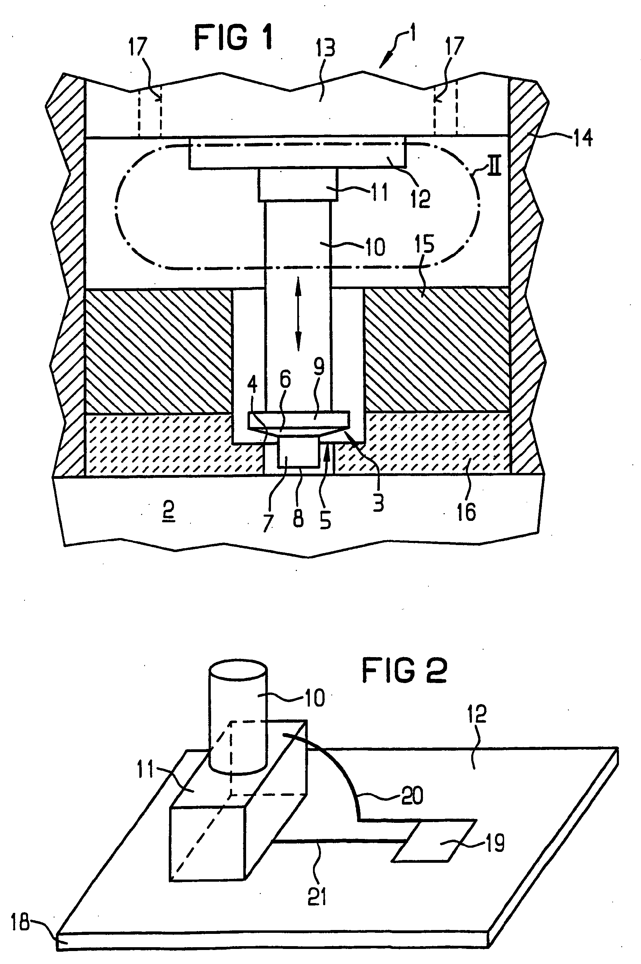

Die in Fig. 1 beispielsweise dargestellte Brennstoffeinspritzventil-Drucksensor-Kombination für Brennstoffeinspritzanlagen zum direkten Einspritzen von Brennstoff in den Brennraum einer Brennkraftmaschine und zum Messen des Drucks in dem Brennraum ist sowohl für gemischverdichtende, fremdgezündete Brennkraftmaschinen, insbesondere solche, die mit Benzin als Brennstoff arbeiten, als auch für selbstzündende Brennkraftmaschinen, insbesondere solche, die mit Diesel-Brennstoff arbeiten, geeignet.

Die erfindungsgemäße Brennstoffeinspritzventil-Drucksensor-Kombination ist mit dem Bezugszeichen 1 bezeichnet und dient zum direkten Einspritzen von Brennstoff in einen Brennraum 2 einer nicht näher dargestellten Brennkraftmaschine sowie zum Messen des Drucks, insbesondere des Verbrennungsdrucks, in dem Brennraum 2. Die Brennstoffeinspritzventil-Drucksensor-Kombination 1 umfaßt einen Ventilschließkörper 3, der mit einer Ventilsitzfläche 4 zu einem Dichtsitz 5 zusammenwirkt. Im dargestellten Ausführungsbeispiel weist der Ventilschließkörper 3 einen der Ventilsitzfläche 4 zugewandten, konischen Abschnitt 6 auf, an welchen sich abspritzseitig ein zylinderförmiger Abschnitt 7 anschließt.

Die in der Zeichnung gezeigte Brennstoffeinspritzventil-Drucksensor-Kombination 1 ist in ihrem geöffneten Zustand dargestellt, bei welchem der Ventilschließkörper 3 von der Ventilsitzfläche 4 abgehoben ist und den Dichtsitz 5 freigibt. In dem geschlossenen Zustand des Dichtsitzes 5 liegt der konische Abschnitt 6 des Ventilschließkörpers 3 an der Ventilsitzfläche 4 dichtend an, und der abspritzseitige, zylinderförmige Abschnitt 7 des Ventilschließkörpers 3 ragt in den Brennraum 2 geringfügig hinein. Die abspritzseitige Stirnfläche dient als Druckmeßfläche 8 für die Druckmeßfunktion.

Der Ventilschließkörper 3 geht über einen stromaufwärtigen, zylinderförmigen Abschnitt 9 in eine Ventilnadel 10 über, die die Hubbewegung zwischen dem Ventilschließkörper 3 und einem piezoelektrischen Element 11 vermittelt. Anstatt eines piezoelektrischen Elements 11 kann auch ein magnetostriktives Element in gleicher Weise Verwendung finden.

Das piezoelektrische Element umfaßt einen Keramikkörper mit piezoelektrischen Eigenschaften, der sich bekannterweise bei Beaufschlagung mit einer elektrischen Betriebsspannung je nach Ausrichtung des piezoelektrischen Kristalls ausdehnt oder zusammenzieht und umgekehrt bei Beaufschlagung mit einem Druck eine elektrische Signalspannung erzeugt. Geeignete piezoelektrische Materialien sind z.B. Quarz, Turmalin, Bariumtitanat (BaTiO₃) oder spezielle Piezokeramiken, wie beispielsweise ein Bleizirkonat-Bleititanat-System (PbZrO₃-PbTiO₃). Vorzugsweise in unmittelbarer Nachbarschaft zu dem piezoelektrischen Element 11 befindet sich eine elektronische Ansteuer- und Auswerteschaltung 12. Die Ansteuer- und Auswerteschaltung 12 ist im dargestellten Ausführungsbeispiel an einer Befestigungsplatte 13 montiert, die z.B. durch Verschweißen mit einem Gehäuse 14 fest verbunden ist. Ebenfalls mit dem Gehäuse 14 fest verbunden ist ein abspritzseitig angeordneter Ringkörper 15, an welchem eine Keramikscheibe 16 montiert ist, die der thermischen Isolation der Brennstoffeinspritzventil-Drucksensor-Kombination 1 gegenüber dem Brennraum 2 der Brennkraftmaschine dient und an welcher die Ventilsitzfläche 4 ausgebildet ist. Die Keramikscheibe 16 und der Ringkörper 15 bilden zusammen einen Ventilsitzkörper, der selbstverständlich auch in vollkommen anderer Weise, insbesondere auch einstückig aus Metall, ausgebildet sein kann. Um den Durchtritt des Brennstoffs zu ermöglichen, sind in der Befestigungsplatte 13 Bohrungen 17 vorgesehen. Das piezoelektrische Element 11 ist vorzugsweise auf der als Hybridschaltung ausgebildeten Ansteuer- und Auswerteschaltung 12 aufgebracht.

Fig. 2 zeigt den Ausschnitt II in Fig. 1 in einer perspektivischen Darstellung, wobei weitere Einzelheiten zu erkennen sind.

Das piezoelektrische Element 11 ist auf die Ansteuer- und Auswerteschaltung 12 vorzugsweise aufgeklebt oder aufgelötet. Das piezoelektrische Element 11 besteht vorzugsweise aus mehreren, gestapelt übereinander angeordneten piezoelektrischen Keramikscheiben, die jeweils an ihrer Ober-und Unterseite mit Elektroden, beispielsweise durch Aufsputtern oder Aufdampfen versehen sind. Die Elektroden sind so gepolt, daß die elektrische Feldstärke in sämtlichen piezoelektrischen Keramikscheiben in der gleichen Richtung gerichtet ist. Durch die gestapelte Anordnung mehrerer piezoelektrischer Keramikscheiben läßt sich ein vergleichsweise großer Hub der Ventilnadel realisieren.

Die Auswerte- und Steuerschaltung ist vorzugsweise als Hybridschaltung ausgeführt, wobei sich auf einem Träger 18 ein Ansteuer- und Auswerte-Chip 19 in Form einer integrierten Schaltung (IC) befindet. Der Ansteuer- und Auswerte-Chip ist über Bonddrähte 20 und 21 mit dem piezoelektrischen Element 11 elektrisch verbunden. Die in Fig. 2 nur ausschnittsweise dargestellte Ventilnadel 10 wird durch eine in der Zeichnung nicht dargestellte Feder, beispielsweise eine Tellerfeder, gegen das piezoelektrische Element 11 gedrückt und an diesem in Anlage gehalten. Zum Öffnen des Dichtsitzes 5 zu Beginn der Brennstoffeinspritz-Phase wird das piezoelektrische Element 11 so angesteuert, daß die auf die Ventilnadel 10 einwirkende Federkraft überwunden wird. Während einer Druckmeß-Phase hingegen wird das piezoelektrische Element 11 mit dem über die Ventilnadel 10 ausgeübten Federdruck und zusätzlich mit dem zu messenden Druck in dem Brennraum 2 der Brennkraftmaschine belastet.

Selbstverständlich bestehen auch andere Möglichkeiten der Montage des piezoelektrischen Elements 11 und der Ansteuer-und Auswerteschaltung 12. Beispielsweise kann das piezoelektrische Element 11 in ähnlicher Weise, wie dies bereits für Klopfsensoren bekannt ist, mittels Kontaktscheiben auf der Ober- und Unterseite kontaktiert werden.

Die Funktionsweise der erfindungsgemäßen Brennstoffeinspritzventil-Drucksensor-Kombination 1 ist folgende:

Zu Beginn einer Brennstoffeinspritz-Phase wird das piezoelektrische Element 11 durch die Ansteuer- und Auswerteschaltung 12 so mit einer Betriebsspannung angesteuert, daß der Ventilschließkörper 3 über die Ventilnadel 11 von der Ventilsitzfläche 4 abgehoben wird und somit den Dichtsitz 5 freigibt. Wenn der piezoelektrische Kristall des piezoelektrischen Elements 11 so ausgerichtet ist, daß sich das piezoelektrische Element 11 bei Anlegen einer Betriebsspannung ausdehnt, ist die Betriebsspannung bei diesem geöffneten Zustand des Dichtsitzes 5 abgeschaltet.

In dem geöffneten Zustand des Dichtsitzes 5 wird Brennstoff unmittelbar in den Brennraum 2 der Brennkraftmaschine eingespritzt. Wenn die zuzumessende Brennstoffmenge erreicht ist, wird der Dichtsitz 5 am Ende der Brennstoffeinspritz-Phase geschlossen, indem das piezoelektrische Element 11 durch die Ansteuer- und Auswerteschaltung 12 so mit einer Betriebsspannung beaufschlagt wird, daß sich der über die Ventilnadel 10 mit dem piezoelektrischen Element 11 verbundene Ventilschließkörper 3 an dem Ventilsitz 4 dichtend anlegt. In der nachfolgenden Druckmeß-Phase dient das piezoelektrische Element 11 als Drucksensor. Der auf die Druckmeßfläche 8 des zylindrischen Abschnitts 7 des Ventilschließkörpers 3 einwirkende Druck des Brennraums 2, insbesondere der Verbrennungsdruck nach dem Zünden des zugemessenen Brennstoffs, beaufschlagt über die Ventilnadel 10 das piezoelektrische Element 11. Das piezoelektrische Element 11 wandelt den anliegenden mechanischen Druck in eine elektrische Spannung um, die an nicht näher dargestellten Elektroden des piezoelektrischen Elements 11 abgegriffen und der Ansteuer-und Auswerteschaltung 12 zugeführt wird. Am Ausgang der Ansteuer- und Auswerteschaltung 12 steht ein entsprechendes Druckmeßsignal zur Verfügung.

Das von der erfindungsgemäßen Brennstoffeinspritzventil-Drucksensor-Kombination erfaßte Drucksignal ermöglicht viele vorteilhafte Funktionen. So kann z. B. festgestellt werden, ob der zugemessene Brennstoff ordnungsgemäß zündet, d. h. ob bei einer fremdgezündeten Brennkraftmaschine eine dem Brennraum zugeordnete Zündkerze ordnungsgemäß arbeitet oder ob bei einer selbstzündenden Brennkraftmaschine der erforderliche Zünddruck erreicht wird. Ferner kann durch Messen des Verbrennungsdrucks in dem Brennraum 2 überprüft werden, ob die Einlaß- und Auslaßventile des Brennraums 2 ordnungsgemäß dichten und nicht aufgrund einer Undichtheit an den Einlaß- und Auslaßventilen oder auch z. B. an der Zylinderkopfdichtung ein Druckverlust auftritt.

Ein Klopfen der Brennkraftmaschine oder Zündaussetzungen können frühzeitig erkannt werden. Das gemessene Drucksignal kann mittels einer geeigneten elektronischen Schaltung z. B. in eine Warnsignal umgesetzt werden, das dem Fahrer eines Kraftfahrzeugs, in welchen eine mit den erfindungsgemäßen Brennstoffeinspritzventil-Drucksensor-Kombinationen ausgestattete Brennkraftmaschine eingebaut ist, angezeigt wird. Das gemessene Drucksignal kann auch in ein Diagnosesystem eingespeist werden, um Defekte der Brennkraftmaschine zu erkennen. Besonders vorteilhaft ist es, daß bei einer Brennkraftmaschine, die mehrere Zylinder aufweist, für jeden Zylinder ohne Zusatzaufwand ein Drucksignal gemessen werden kann, da jedem Zylinder ein konventionelles Brennstoffeinspritzventil zugeordnet ist, das durch die erfindungsgemäße Brennstoffeinspritzventil-Drucksensor-Kombination ersetzt werden kann. Insbesondere ist eine für jeden Zylinder der Brennkraftmaschine individuelle Klopfregelung oder Zündaussetzererkennung möglich.

Dabei ist die an dem piezoelektrischen Element 11 gemessene Signalspannung um so größer, je höher der auf die Druckmeßfläche 8 einwirkende Druck des Brennraums 2 ist.

Ferner kann die Laufruhe der Brennkraftmaschine gemessen werden.

## Patentansprüche

1. Brennstoffeinspritzventil-Drucksensor-Kombination (1) für Brennstoffeinspritzanlagen zum direkten Einspritzen von Brennstoff in den Brennraum (2) einer Brennkraftmaschine und zum Messen des Drucks in dem Brennraum (2) mit einem piezoelektrischen oder magnetostriktiven Element (11) und einem mit einer Ventilsitzfläche (4) zu einem
Dichtsitz (5) zusammenwirkenden Ventilschließkörper (3),
**dadurch gekennzeichnet,**
**dass** der Ventilschließkörper (3) mit dem piezoelektrischen oder magnetostriktiven
Element (11) kraftschlüssig verbunden ist, und
**dass** eine elektronische Ansteuer- und Auswerteschaltung (12) vorgesehen ist, die während einer Brennstoffeinspritz-Phase das piezoelektrische oder magnetostriktive
Element (11) so ansteuert, dass der von diesem betätigte Ventilschließkörper (3) von der Ventilsitzfläche (4) abhebt und den Dichtsitz (5) öffnet, und die während einer
Druckmess-Phase einen von dem Ventilschließkörper (3) auf das piezoelektrische oder magnetostriktive Element (11) übertragenen und von diesem in ein elektrisches Signal gewandelten Druck in dem Brennraum (2) erfasst.

2. Brennstoffeinspritzventil-Drucksensor-Kombination nach Anspruch 1,
**dadurch gekennzeichnet,**
**daß** die Auswerteschaltung (12) eine Hybridschaltung ist, die in unmittelbarer Nachbarschaft des piezoelektrischen oder magnetostriktiven Elements (11) angeordnet ist.

3. Brennstoffeinspritzventil-Drucksensor-Kombination nach Anspruch 1 oder 2,
**dadurch gekennzeichnet,**
**daß** das piezoelektrische oder magnetostriktive Element (11) und der Ventilschließkörper (3) über eine Ventilnadel (10) miteinander verbunden sind.

4. Brennstoffeinspritzventil-Drucksensor-Kombination nach einem der Ansprüche 1 bis 3,
**dadurch gekennzeichnet,**
**daß** der Ventilschließkörper (3) eine Druckmeßfläche (8) aufweist.

5. Verfahren zum Betreiben einer Brennstoffeinspritzventil-Drucksensor-Kombination (1) für Brennstoffeinspritzanlagen zum direkten Einspritzen von Brennstoff in den
Brennraum (2) einer Brennkraftmaschine und zum Messen des Drucks in dem Brennraum (2), mit einem piezoelektrischen oder magnetostriktiven Element (11) und einem mit
einer Ventilsitzfläche (4) zu einem Dichtsitz (5) zusammenwirkenden
Ventilschließkörper (3),
**dadurch gekennzeichnet,**
**dass** eine elektronische Ansteuer- und Auswerteschaltung (12) vorgesehen ist und mit folgenden Verfahrensschritten:
- Öffnen des Dichtsitzes (5) zu Beginn einer Brennstoffeinspritz-Phase, indem das piezoelektrische oder magnetostriktive Element (11) durch die Ansteuer- und Auswerteschaltung (12) mit einer Betriebsspannung so beaufschlagt wird, dass der Ventilschließkörper (3) von der Ventilsitzfläche (4) abhebt und den Dichtsitz (5) öffnet,
- Schließen des Dichtsitzes (5) am Ende einer Brennstofieinspritz-Phase, indem die Betriebsspannung für das piezoelektrische oder magnetostriktive Element (11) durch die Ansteuer- und Auswerteschaltung (12) geändert wird, und
- Erfassen einer Signalspannung an dem piezoelektrischen oder magnetostriktiven Element (11) durch die Ansteuer- und Auswerteschaltung (12) während einer Druckmess-Phase, wobei die Signalspannung durch den in dem Brennraum (2) herrschenden und über den Ventilschließkörper (3) auf das piezoelektrische oder magnetostriktive Element (11) einwirkenden Druck hervorgerufen wird.

6. Verfahren nach Anspruch 5,
**dadurch gekennzeichnet,**
**daß** durch das Erfassen der Signalspannung an dem piezoelektrischen oder magnetostriktiven Element (11) während der Druckmeß-Phase ein Klopfen und/oder eine Zündaussetzung der Brennkraftmaschine erfaßt wird.

7. Verfahren nach Anspruch 6,
**dadurch gekennzeichnet,**
**daß** die Brennkraftmaschine mehrere Zylinder aufweist, denen jeweils eine Brennstoffeinspritzventil-Drucksensor-Kombination (1) zugeordnet ist, und
**daß** das Klopfen und/oder die Zündaussetzung für jeden Zylinder der Brennkraftmaschine separat erfaßt wird.

## Claims

1. Fuel injection valve and pressure sensor combination (1) for fuel injection systems for directly injecting fuel into the combustion chamber (2) of an internal combustion engine and for measuring the pressure in the combustion chamber (2), with a piezoelectric or magnetostrictive element (11) and a valve-closing body (3) which interacts with a valve seat surface (4) to form a sealing seat (5), **characterized in that** the valve-closing body (3) is connected frictionally to the piezoelectric or magnetostrictive element (11), and **in that** an electronic activation and evaluation circuit (12) is provided which, during a fuel injection phase, activates the piezoelectric or magnetostrictive element (11) in such a manner that the valve-closing body (3) which is actuated by the latter lifts off from the valve seat surface (4) and opens the sealing seat (5) and which, during a pressure-measuring phase, detects, in the combustion chamber (2), a pressure which is transmitted by the valve-closing body (3) to the piezoelectric or magnetostrictive element (11) and is converted by the latter into an electric signal.

2. Fuel injection valve and pressure sensor combination according to Claim 1, **characterized in that** the evaluation circuit (12) is a hybrid circuit which is arranged in the immediate vicinity of the piezoelectric or magnetostrictive element (11).

3. Fuel injection valve and pressure sensor combination according to Claim 1 or 2, **characterized in that** the piezoelectric or magnetostrictive element (11) and the valve-closing body (3) are connected to each other via a valve needle (10).

4. Fuel injection valve and pressure sensor combination according to one of Claims 1 to 3, **characterized in that** the valve-closing body (3) has a pressure-measuring surface (8).

5. Method for operating a fuel injection valve and pressure sensor combination (1) for fuel injection systems for directly injecting fuel into the combustion chamber (2) of an internal combustion engine and for measuring the pressure in the combustion chamber (2), with a piezoelectric or magnetostrictive element (11) and a valve-closing body (3) which interacts with a valve seat surface (4) to form a sealing seat (5), **characterized in that** an electronic activation and evaluation circuit (12) is provided, and with the following method steps:
- opening the sealing seat (5) at the beginning of a fuel injection phase by the piezoelectric or magnetostrictive element (11) being subjected by the activation and evaluation circuit (12) to an operating voltage in such a manner that the valve-closing body (3) lifts off from the valve seat surface (4) and opens the sealing seat (5),
- closing the sealing seat (5) at the end of a fuel injection phase by the operating voltage for the piezoelectric or magnetostrictive element (11) being changed by the activation and evaluation circuit (12), and
- detecting a signal voltage at the piezoelectric or magnetostrictive element (11) by means of the activation and evaluation circuit (12) during a pressure-measuring phase, the signal voltage being caused by the pressure prevailing in the combustion chamber (2) and acting on the piezoelectric or magnetostrictive element (11) via the valve-closing body (3).

6. Method according to Claim 5, **characterized in that** a knocking and/or a misfiring of the internal combustion engine is/are detected by detecting the signal voltage at the piezoelectric or magnetostrictive element (11) during the pressure-measuring phase.

7. Method according to Claim 6, **characterized in that** the internal combustion engine has a plurality of cylinders, each of which is assigned a fuel injection valve and pressure sensor combination (1), and **in that** the knocking and/or the misfiring is/are detected separately for each cylinder of the internal combustion engine.

## Revendications

1. °) Combinaison formée d'un injecteur de carburant et d'un capteur de pression (1) pour des installations d'injection de carburant servant à l'injection directe de carburant dans la chambre de combustion (2) d'un moteur à combustion interne et pour mesurer la pression régnant dans la chambre de combustion (2) à l'aide d'un élément piézo-électrique ou magnétostrictif (11) ainsi que d'un organe d'obturation de soupape (3) coopérant avec une surface formant siège de soupape (4) pour former un siège d'étanchéité (5),
**caractérisée en ce que**
l'organe d'obturation de soupape (3) est relié par une liaison de force à l'élément piézo-électrique ou magnétostrictif (11) et
un circuit électronique de commande et d'exploitation (12) commande l'élément piézo-électrique et/ou magnétostrictif (11) au cours de la phase d'injection de carburant pour que l'organe d'obturation de soupape (3) ainsi commandé se soulève de la surface formant siège de soupape (4) et ouvre le siège d'étanchéité (5) et saisisse pendant une phase de mesure de pression, la pression régnant dans la chambre de combustion (2) transmise par l'organe de fermeture de soupape (3) à l'élément piézo-électrique ou magnétostrictif (11) qui la transforme en un signal électrique.

2. °) Combinaison formée d'un injecteur de carburant et d'un capteur de pression selon la revendication 1,
**caractérisée en ce que**
le circuit d'exploitation (12) est un circuit hybride installé au voisinage immédiat de l'élément piézo-électrique ou magnétostrictif (11).

3. °) Combinaison formée d'un injecteur de carburant et d'un capteur de pression selon la revendication 1 ou 2,
**caractérisée en ce que**
l'élément piézo-électrique ou magnétostrictif (11) et l'organe d'obturation de soupape (3) sont reliés par une aiguille d'injecteur (10).

4. °) Combinaison formée d'un injecteur de carburant et d'un capteur de pression selon l'une des revendications 1 à 3,
**caractérisée en ce que**
l'organe d'obturation de soupape (3) présente une surface de mesure de pression (8).

5. °) Procédé de gestion d'une combinaison 1 formé d'un injecteur de carburant et d'un capteur de pression pour les installations d'injection de carburant servant à l'injection directe de carburant dans la chambre de combustion (2) d'un moteur à combustion interne et pour mesurer la pression régnant dans la chambre de combustion (2) à l'aide d'un élément piézo-électrique ou magnétostrictif (11) et d'un organe d'obturation de soupape (3) coopérant avec une surface de siège de soupape (4) pour former un siège d'étanchéité (5),
**caractérisé par**
un circuit électronique de commande et d'exploitation (12) et par les étapes de procédé suivantes :
- ouverture du siège d'étanchéité (5) au début d'une phase d'injection de carburant en appliquant à l'élément piézo-électrique ou magnétostrictif (11) une tension de fonctionnement par le circuit de commande et d'exploitation (12) de façon que l'organe d'obturation de soupape (3) se soulève de la surface formant siège de soupape (4) et ouvre le siège d'étanchéité (5),
- fermeture du siège d'étanchéité (5) à la fin de la phase d'injection dé carburant par modification de la tension de fonctionnement de l'élément piézo-électrique ou magnétostrictif (11) par le circuit de commande et d'exploitation (12) et
- saisie d'un signal de tension sur l'élément piézo-électrique ou magnétostrictif (11) par le circuit de commande et d'exploitation (12) au cours d'une phase de mesure de pression, le signal de tension étant produit par la pression régnant dans la chambre de combustion (2) et transmise par l'organe d'obturation de soupape (3) à l'élément piézo-électrique ou magnétostrictif (11).

6. °) Procédé selon la revendication 5,
**caractérisé en ce que**
par la saisie du signal de tension sur l'élément piézo-électrique ou magnétostrictif (11) au cours de la phase de mesure de pression, on déteste le cliquetis et/ou les ratés d'allumage du moteur à combustion interne.

7. °) Procédé selon la revendication 6,
**caractérisé en ce que**
le moteur à combustion interne comporte plusieurs cylindres auxquels est associée chaque fois une combinaison (1) formée d'un injecteur de carburant et d'un capteur de pression et
on saisit séparément le cliquetis et/ou les ratés d'allumage pour chaque cylindre du moteur à combustion interne.
